# EUROPEAN PATENT SPECIFICATION

(11) **EP 1 169 904 B1**
(45) Date of publication and mention of the grant of the patent: **17.09.2003**
(21) Application number: 01203135.7
(22) Date of filing: 04.06.1996
(51) Int. Cl.: A01D 34/416

(54) **Rotary flail feeding device**
Zufuhrvorrichtung für Schlegelmäher
Alimentation d'une débroussailleuse à fil

(30) Priority: 07.06.1995 US 472188; 01.05.1996 US 637044
(43) Date of publication of application: 09.01.2002
(62) Divisional of application: 96919179.0
(73) Proprietor: Berfield, Robert C., Jersey Shore, Pennsylvania 17740-9240 (US)
(72) Inventor: Berfield, Robert C., Jersey Shore, Pennsylvania 17740-9240 (US)
(74) Representative: Warren, Keith Stanley

(56) References cited:
- US-A- 4 223 440
- US-A- 4 244 103
- US-A- 4 290 200
- US-A- 4 335 510

## Description

The invention relates to a rotary flail feeding device commonly used to trim grass, weeds and light brush.

Prior flail feeding devices include a rotary head, a coiled length of flail line, typically an extruded plastic strand, confined within the head and a mechanism for incrementally feeding the line to one or two flails extending out of the head through feed passages in the outer circumference of the head. The most common flail feeding device includes a central bump button located on the head which is forced against the ground or another surface to actuate an indexing mechanism that feeds lengths of flail line out the head to reestablish the lengths of flails that have been shortened during use. Another type of flail feeding device uses a mechanism which extends a length of line every time the device head is slowed from a high operating speed. A flail feeding device with an automatic adjustment is known from US-A-4 244 103. A flail feeding device according to the preamble of claim 1 is disclosed in US-A-4 335 510.

Problems are encountered in conventional flail feeding devices. The bump button device includes complicated springs, ratchets and wear surfaces which during use tend to become gummed with mud, wet grass and the like so the device does not dispense additional line to the flails as required. These devices are massive, include many parts and are relatively expensive to manufacture and assemble. Further, maintenance of dynamic balance is difficult with these types of devices. The bump-type heads run at a high rotational speed requiring that the head be balanced in order to prevent undesired vibration. Indexing of the heads to dispense flail line can destroy the dynamic balance of the head.

Additionally, with the bump-type heads the flail line is fed from the inside of the coil confined in the head radially outwardly through the discharge opening. During feeding of the line, the head is subjected to sharp shocks which tend to jam the line in the coil and prevent smooth feeding line to replenish the length of the flail. Clearing a jammed coil requires disassembly of the head, an awkward and time-consuming procedure.

The heads with automatic line feed in response to the rotation of the head have the disadvantage of always feeding additional line to the flail when the head is slowed, independent of whether additional line is actually required. In these heads, extra line fed to the flail is cut off and wasted each time the head is slowed from a high operational speed.

It is an object of the present invention to provide a rotary flail feeding device for cutting grass, weeds, small shrubs and the like which during use automatically maintains the length of the flail or flails, without operator intervention.

The invention consists in a rotary flail feeding device comprising a rotatable head having opposite sides extending transversely to its rotational axis, an annular storage cavity surrounding the rotational axis of the head, a post disposed on the rotational axis, an annular outlet opening towards one side of the head and surrounding the axis inwardly of the storage cavity, and a coil of flail line disposed in the storage cavity and having the line extending therefrom radially inwardly, wound around the post in a direction opposite to the intended direction of rotation of the head and extending through the outlet opening to form a flail or a pair of flails.

Operation of the flail feeding device according to the invention automatically maintains the or each flail at a proper operating length, without the necessity of a bump drive with an indexing mechanism or stopping and restarting the head to feed line. Inward feeding of the line from the storage cavity to and around the post and then out the outlet opening prevents line jams.

The invention may be used with a single flail or, preferably, with two flails which are held 180 degrees apart to maintain balance and prevent vibration.

When the device according to the invention is stopped, the line wound around the post expands and may frictionally engage a rotary line directing member to prevent undesired lengthening of the flail and waste of flail line.

The head has few parts and may be manufactured inexpensively and assembled rapidly and cheaply. The simple construction of the device assures a long operational line. The construction with a central annular flail feed opening resists entry of foreign matter into the head.

In order that the present invention may be more readily understood, reference will now be made to the accompanying drawings, in which:-
Figure 1 is a vertical section taken through the head of a first embodiment of rotary flail feeding device according to the invention;
Figure 2 is a view taken generally along line 2―2 of Figure 1; Figure 3 is a vertical section taken through the line directing member shown in Figures 1 and 2;
Figure 3A is a bottom view of the line directing member;
Figure 4 is a generalized horizontal bottom view of the head shown in Figure 1 with portions of the head removed and showing flails and line wound in the head in a first direction;
Figure 5 is a view similar to Figure 4 showing the line wound in the head in a second direction;
Figure 6 is a vertical section through a line cartridge; and
Figure 7 is a vertical section of a second embodiment of rotary flail feeding device using a cartridge as shown in Figure 6.

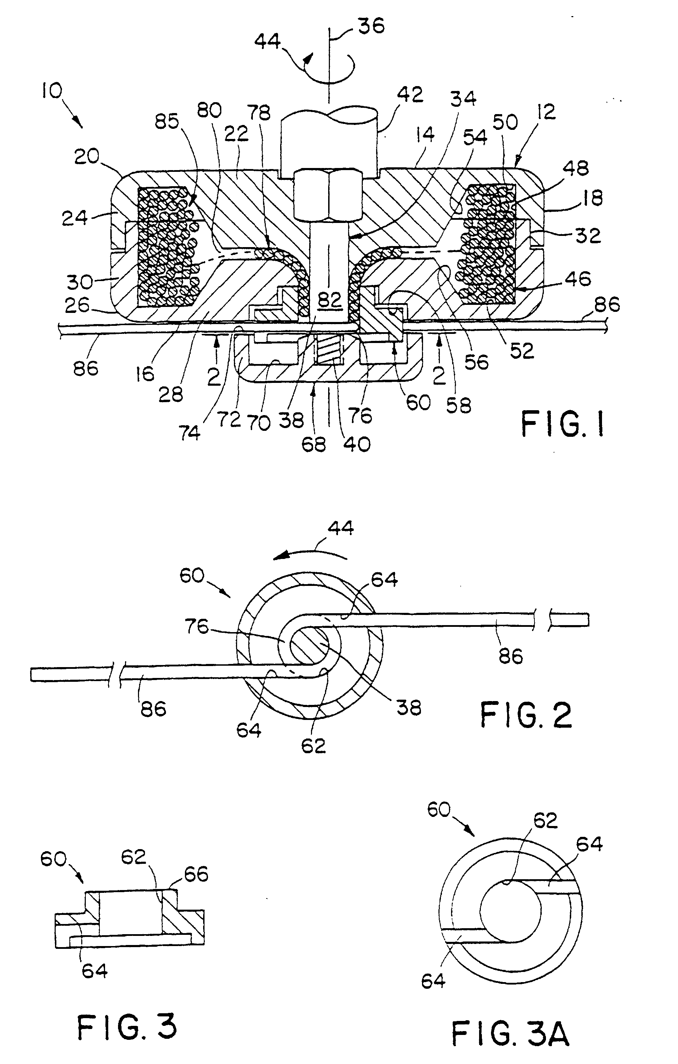

A first embodiment of the rotary flail feeding device 10 is illustrated in Figures 1-5 of the drawings. Device 10 includes a rotary head 12 with flat opposed circular top and bottom sides 14 and 16 and a cylindrical outer surface 18 joining the sides. Hub 20 includes a circular top base 22 defining side 14 and an outer circumferential skirt or wall 24 extending from the outer edge of the top base partially across surface 18. Cover 26 includes a central circular bottom base 28 and an outer skirt or circumferential wall 30 extending from the outer edge of the base 28 partially across surface 18. The skirts 24 and 30 are secured together at circumferential joint 32. The hub and cover may be made from suitable material including metal or plastic.

A central post 34 is mounted on hub 20 in alignment with rotational axis 36 of head 12. The post, which may be made of metal, rotates with the head and includes a free cylindrical end 38 extending a short distance past head side 16. Threaded extension 40 extends outwardly from post end 38. Rotary drive support member 42 is mounted on the end of the post at side 14. Drive support member 42 is attached to the output shaft of a conventional rotary drive device, which may be an electric motor or gas powered engine, to rotate the head 12 about axis 36 in the direction of arrow 44. When the head is rotated at a high operational speed a pair of flails extend radially outwardly from the head for trimming grass, weeds, light brush and the like, as will be described.

Annular line storage cavity 46 is formed in head 12 on the inside of skirts 24 and 30 and is defined by interior cylindrical wall 48 on skirts 24 and 30, top and bottom walls 50 and 52 formed in the hub and cover respectively and inwardly sloping frusto-conical guide walls 54 and 56 which extend from the inner edges of walls 50 and 52 toward each other and radially inwardly toward axis 36. Cavity 46 surrounds post 34 and axis 36.

Stepped recess 58 is formed in cover base 28 and surrounds the end 38 of post 34. Stepped line directing member 60, shown in Figures 1-3, is fitted in the recess and surrounds the post end 38. As illustrated in Figure 1, the outer surfaces of the line directing member are spaced from the inner surfaces of the recess to permit free rotation of member 60 in head 12.

The line directing member 60, which may be formed from metal or other suitable material, includes an interior cylindrical line brake surface 62 having a diameter greater than the diameter of the post end 38 which extends through the opening defined by surface 62. Two parallel line directing or guide grooves 64 are formed in the lower surface of member 60 and extend tangentially outwardly in opposite directions from opposed sides of surface 62 to the outer circumferential surface of the member. (See Figure 3A). Grooves 64 are spaced apart 180 degrees around the member. When the member is positioned in head 12, as shown in Figure 1, cylindrical locating surface 66 engages the bottom of recess 58 to locate the member in the head with the bottom of the guide grooves 64 at the level of head side 16 to guide the flails along the side.

Circular guiding member 68 is threaded onto post end 40 and includes an annular recess 70 and an outer wall 72 having an upper guide surface 74. The guide surface 74 overlies side 16 outwardly of the stepped recess 58 and is spaced from side 16 a distance slightly greater than the diameter of the flails rotated by head 12. The outer edge of the line directing member 60 extends a distance below surface 74 into recess 70 to assure proper capture of the flails. The surface 74 holds the flails in grooves 64.

Line directing member 60 is spaced radially outwardly from pest end 38 to define an annular outlet opening 76 at the end of the post. Annular line feeding passage 78 extends from opening 76 a distance into the head along post 34 and bends 90 degrees away from the post to extend radially outwardly from the post to annular inlet opening 80 opening into storage cavity 46 between the inner ends of walls 54 and 56, as shown in Figure 1. The annular inlet opening 80 is located approximately midway between top and bottom walls 50 and 52. The top wall of passage 78 is defined by cylindrical line winding surface 82 on post 34 and the inner surface of top base 22. The bottom wall of passage 78 is defined by brake surface 62 and the inner surface of bottom base 28. The passage 78 provides unimpeded 360 degree communication between storage cavity 46 and opening 76 and facilitates feeding of flail line from the cavity to the opening.

The width of line feeding passage 78 away from post 34 is less than twice the diameter of the line fed through the passage to prevent lengths of line crossing over each other and assure smooth feeding of the line from cavity 46 through the passage, out opening 76 and to the two flails extending outwardly from the head through guide grooves 64, as illustrated. Adjacent the post the width of the passage is slightly greater than the diameter of the line.

The loading and operation of flail feeding device 10 will now be described.

Device 10 is loaded with a coil wound from two lengths of stiffly flexible flail line. This line may be extruded plastic line of the type used in conventional rotary flail-type trimming devices. The line is stiffly flexible with an inherent resiliency which tends to straighten bends.

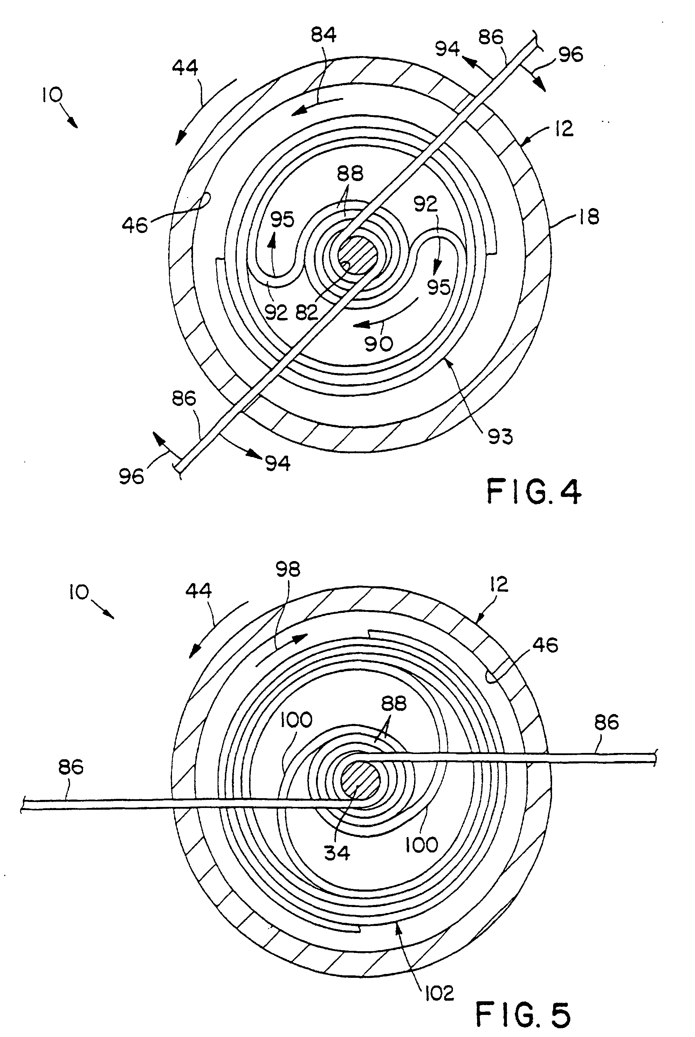

The empty head is loaded with two lengths of flail line by unthreading guiding member 68 from post 34 and removing directing member 60 from recess 58. The ends of a pair of lines to be loaded in the head are arranged side-by-side and are then extended into the exposed end of feeding passage 78 and are pushed through the passage and into storage cavity 46. During insertion, the lines are preferably oriented to wind the two flail lines around the cavity in the direction of arrow 84 shown in Figure 4, the same direction in which the head is rotated as indicated by arrow 44. As the head is gradually rotated in a direction opposite arrow 44, the two lengths of flail line are fed side-by-side through passage 78 and into the storage cavity 46 until the cavity is filled with a coil 85 of line. The free ends of the flail lines are then held against post 34 and directing member 60 is repositioned in recess 58 with the lines extending through the central opening. The two ends are then positioned 180 degrees opposite to each other with respect to the post and are bent away from the post and fitted in guide grooves 64 in member 60 as illustrated in Figure 2. Guiding member 68 is then rethreaded on the end of post 34 so that the two free ends of the flail line are parallel and extend tangentially away from the post in opposite directions and are spaced 180 degrees apart Guide surface 74 on member 68 holds the free ends in place in the grooves and adjacent to head side 16.

As shown in Figure 1, cavity 46 has a relatively large capacity and holds the large coil 85 made up of both lengths of flail line. The two lengths of flail line are wound into the cavity 46 from the inside of the cavity without forming tangles. The resiliency of the flail line holds loops in the coil against the outer wall 48 to facilitate smooth inward feeding of the line from the coil to passage 78 without jams during operation of the head and lengthening of the flails.

After head 12 has been loaded with flail line and assembled as described with the ends of the two lines extending outwardly from the bottom of the head, the rotary drive motor or engine is started to rotate head 12 at an operating speed about axis 36 in the direction of arrow 44.

When head 12 has been accelerated to an operating speed the two ends of the flail line wound in the head are thrown radially outwardly from post 34 to form a pair of cutting flails 86 shown in Figures 1, 2 and 4. The two flail lines extending from the coil 85, through passage 78 and out opening 76 are tightly spirally wound against each other in the lower inner portion of passage 78. The two lines 88 are wound into and along the passage 78 from cavity 46 to opening 76 in the direction of arrow 90 shown in Figure 4, opposite to the direction of rotation of head 12 as indicated by arrow 44. With the two lines tightly spirally wound in the passage end around surface 82 as described, the two flails 86 extend tangentially outwardly in opposite directions from post 34 so that unwinding of the flails around the rotating post in the direction of arrow 44 will unwind the line from the post and lengthen the flails.

As shown in Figure 4, the lines in coil 93 are wound around head 12 in the direction of rotation of the head and spiral windings 88 are wound into passage 78 and along surface 82 in the opposite direction with the lines in the coil 93 connected to the lines in the spiral windings 88 by stiff 180 degree back loops 92. Loops 92 are sharply bent and are each located to one side of the post 34. The loops do not extend across the post 34. Because the line is stiffly resilient and back loops are sharply bent, the inner ends of the loops are biased toward the post and hold the spiral windings together in passage 78.

During initial rotation of head 12, the flails 86 and back loops 92 are subjected to centrifugal forces. The centrifugal forces acting on the flails 86 hold the spiral winding 88 tight on post winding surface 82. During initial rotation of the head, flails 86 unwind from the rotating post in the direction of arrows 94 and are lengthened. Unwinding is caused by centrifugal forces exerted on the rotating flails. During unwinding, the two spiral coils of line on surface 82 freely slide axially along the post toward opening 76 and additional line is fed radially inwardly through loops 92 onto windings 88 from coil 93. During feeding of line to the windings, the loops 92 move around the head in a direction opposite to the direction of rotation of the head, as indicated by arrows 95. Also, during unwinding the directing member 60 is rotated in head 12 in the direction of rotation of the head,as indicated by arrow 94. The lengths of the flails 86 grow as line is unwound from the post. Additional line from storage cavity 46 is wound into passage 78, onto windings 88 and onto the post.

As the flails lengthen, air drag is exerted on the extending rotating flails. This drag exerts forces on the flails generally in the directions of arrows 96, opposite to the direction of unwinding of the flails as indicated by arrows 94. The flails 86 continue to unwind and lengthen until the air drag forces exerted on the flails prevent further unwinding of the line and maintain the length of the flails. When this condition is reached, the opposed centrifugal and air drag forces are at equilibrium. The lengths of the flails at equilibrium is desirably the standard length of the flails in a conventional rotary head.

At equilibrium, the back loops 92 are rotated in the head and centrifugal forces pull these portions radially outwardly away from the post 34 to tighten the line in spiral windings 88 in passage 78 and assist in holding the windings 88 tight on winding surface 82 on the post to assure that the line rotates with the head. The connection between the windings and surface 82 does not prevent axial shifting of the windings down the post toward opening 76 during unwinding and lengthening of flails 86. As the flail line unwinds from post, additional line is automatically fed from coil 93 through head 92 and into windings 88 to maintain the windings, as described.

After head 12 has been loaded with flail line, as described, and rotated to operating speed, the two flails 86 are automatically extended to an operating length. The head may then be used for trimming. During trimming, the line directing member 60 keeps the two flails 86 in 180 degree orientation on the post to maintain dynamic balance for the head.

As head 12 is used,the ends of the flails are subject to wear and, in time, line material is broken off from the ends of the flails. When this occurs the air drag exerted on the shortened flails is reduced. Shortening of the flails reduces the air drag forces to a greater extent than the shortening of the flails reduces the centrifugal forces, with the result that equilibrium is destroyed and the centrifugal forces unwind the flails from the rotating post 34 in the forward direction of arrow 94 until the increase in length of the flails increases the air drag sufficiently to reestablish equilibrium between the two forces and reestablishes the length of the flails. During simultaneous lengthening of both flails, member 60 is rotated around post 34 in the direction of rotation of head 12.

If only one flail is shortened, this line is lengthened, as described, and the member 60 is rotated on the head to unwind the other flail a distance around the post until an equilibrium is again established. In this event, the shortened flail will be slightly shorter than the unshortened flail. In time, both flails will wear and have the same length.

The lengths of the flails are automatically maintained, as described,during trimming using head 12, thereby eliminating the necessity of operator intervention to maintain the flail lengths and full trimming efficiency.

Often during trimming and at the end of a trimming job, it is necessary to stop rotation of head 12. When the rotational speed of the head is slowed, the spiral windings of coils 88 in passage 78 relax and expand due to the resiliency of the line material. When this happens, the coils on the lower end of the passage at the end of post 38 expand and engage the interior brake surface 62 of directing member 60 so that the member cannot rotate relative to the windings. At this time, the resilient back loops 92 extending between the coils of line material in cavity 46 and the windings hold the windings tightly together to maintain tight windings 88 in the passage. As the head slows, the tight windings in the passage prevent the coils on the end of the post from rotating, thereby holding the directing member 60 against rotation relative to the head so that line material is not fed to the flails and the length of the flails is maintained. The back loops maintain tension in the windings or loops during restarting of the head and rotation back to operating speed to prevent elongation of the flails during start-up, prior to reestablishing equilibrium.

The flail line is fed freely radially inwardly from the coils in cavity 46, past guide walls 54 and 56, through passage end 80 and into the passage 78 without crossover or wedging jams. Once in the passage, the lines are tightly wound together to form spiral windings and move freely through the passage to replace material removed from the ends of the flails and lengthen the flails.

During operation of head 12, directing member 60 rotates relative to the head in the direction of rotation of the head as flail line is fed from the windings 88 out mouth 76 to lengthen flails 86. During this rotation, the directing member rotates on the outer surfaces of the line coils or windings on winding surface 82, which serve as a renewable bearing for the directing member. The directing member is preferably formed of material harder than the plastic forming the lines so that wear at the bearing occurs in the line material which is being fed out of the head. This wear is inconsequential to the trimming operation and reduces wear on the directing member. The directing member also rotates on the bottom of recess 58 at rotating surface 66. Axial load is low and wear at this surface is minimal.

The head 12 may be mounted on a conventional type string trimmer with a trimming blade located a distance radially outwardly from the head for trimming overlong flails.

Figure 5 illustrates the interior of head 12 in which line has been wound in cavity 46 in the direction of arrow 98, opposite to the direction of rotation of the head, as indicated by arrow 44. Two lengths of flail line are wound into the cavity to fill the cavity. The ends of the line are fed through the passage 78 and out mouth 76. The directing member and guiding members are then mounted on the head 12, as previously described, with the two ends fitted in the guide grooves 64 and extending outwardly away from the post, as shown in Figure 2.

Upon initial rotation of the Figure 5 head the lines are tightly spiral wound in passage 78 with the lower ends of the lines wound around and engaging winding surface 82 as previously described. Flails 86 extend outwardly from the post and are automatically adjusted in length as previously described. The inner ends of the tight spiral windings 88 in passage 78 are connected to the wound coils of line material in cavity 46 by flexible crossing loops 100 which extend inwardly from coil 102 to one side of post 34 and join the tight spiral winding 88 on the opposite side of the post. When the head 12 is slowed to a stop, the crossing loops 100 tend to assume a straight position and tend to open the spiral windings 88, loosen the windings in passage 78 and may permit limited rotation of the directing member relative to the head. Such rotation unwinds short lengths of line from the post and lengthens the flails 86 short distances beyond the equilibrium positions.

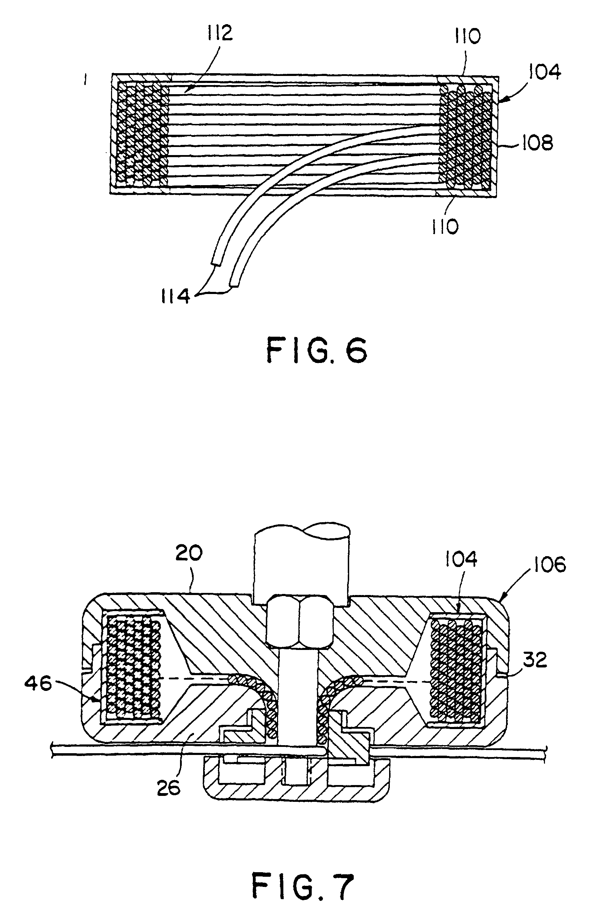

Figure 6 illustrates a flail line cartridge 104 adapted to be loaded in head 106 shown in Figure 7. The cartridge includes a cylindrical wall 108 with a pair of radially inwardly extending flanges 110 on the upper and lower edges of the wall. The wall and flanges define an interior space in which two lengths of flail line are pre-wound to form a coil 112 with free ends 114 extending outwardly through the center of the cartridge.

Head 106 is like head 12 with the exception that the cover 26 is removable from hub 20 at joint 32 to open the storage cavity 46 for reception of the cartridge 104 with pre-wound coil 112. The cartridge is preferably provided with indicia, such as an arrow extending around the outer surface of one of the flanges 110, to indicate the proper orientation of the cartridge in the head so that during use back loops 92 are formed in the portions of the line extending inwardly to the tight spiral windings in passage 73, as illustrated in Figure 4.

The cartridge with pre-wound line coil is loaded into head 106 by removing the guiding member and directing member, as previously described, opening the head at joint 32 and then placing the cartridge 104 in the portion of the storage recess 46 in the hub. The free line ends 114 are then led along the central surface of the hub and along the end of post 34. These ends are fed through the central opening in cover 26 which is then positioned on the hub to close the head. Directing and guiding members 60 and 68 are then reattached to the head as previously described. The indicia on cartridge 104 facilitates placement of the cartridge in the head with the coil wound into the cartridge in a direction opposite to the direction of rotation of the head for forming of back loops during operation.

After the cartridge has been placed in head 106 as described, the head is rotated by the drive and the lengths of the two flails are extended and adjusted automatically, as previously described.

The described rotary flail feeding devices each include a pair of flails oriented 180 degrees about post 34. The two flails are balanced dynamically and operate smoothly. However, if desired, the disclosed heads may be operated with a single flail, the length of which is automatically adjusted and lengthened as previously described. Line directing member 60 is not required to maintain proper flail length and may be omitted if desired.

## Claims

1. A rotary flail feeding device comprising a rotatable head (12) having opposite sides (14,16) extending transversely to its rotational axis (36), an annular storage cavity (46) surrounding the rotational axis (36) of the head, a post (34) disposed on the rotational axis (36), an annular outlet opening (76) towards one side (16) of the head and surrounding the axis (36) inwardly of the storage cavity, and a coil (85,93,102) of flail line disposed in the storage cavity **characterised in that** the line is extending from the storage cavity radially inwardly, is wound around the post (34) in a direction opposite to the intended direction of rotation of the head and extends through the outlet opening to form a flail or a pair of flails.

2. A device as claimed in claim 1, wherein the head (12) includes a 360 degree line feeding passage (78) extending radially inwardly from the storage cavity (46) and along the post (34) to the outlet opening (76).

3. A device as claimed in claim 2, wherein the line feeding passage (78) includes a first portion located adjacent the outlet opening (76) and extending along the axis (36), a bend away from the axis and a second portion extending to the storage cavity (46).

4. A device as claimed in claim 3, wherein the line feeding passage (78) includes a 90 degree bend and opens into the center of an inner wall of the storage cavity (46).

5. A device as claimed in claim 2, 3 or 4, wherein the width of the line feeding passage (78) is less than twice the thickness of the flail line.

6. A device as claimed in any preceding claim, wherein the or each flail line of the coil (93) in the storage cavity (46) is wound within the storage cavity in the intended direction of rotation of the head (12) and is connected to the portion of the line wound about the post (34) via a back loop (92) in the line.

7. A device as claimed in any preceding claim 1 to 5, wherein the or each flail line of the coil (102) in the storage cavity (46) is wound within the storage cavity in the direction opposite to the intended direction of rotation of the head (12) and is connected to the portion of the line wound about the post (34) via a flexible loop (100) in the line.

8. A device as claimed in any preceding claim, wherein the diameter of the coil (88) formed by the flail line(s) wound about the post (34) extends a distance radially outwardly from the post.

9. A device as claimed in any preceding claim including a line directing member (60) rotatably mounted on said one side (16) of the head (12), said member surrounding the post (34) and having a line guide (64) for guiding the line radially outwardly from the outlet opening.

10. A device as claimed in claim 9, wherein the line directing member (60) includes a second line guide (64), and the two line guides are located 180 degrees across from each other.

11. A device as claimed in claim 10, wherein each line guide comprises a groove (64), the grooves extending parallel to each other and tangentially in opposite directions away from the outlet opening (76).

12. A device as claimed in any preceding claim, including a guiding member (68) on the end (38) of the post (34).

13. A device as claimed in any preceding claim, comprising a flail line cartridge (104) defining the storage cavity and disengageable from the post (34).

14. The method of operating a rotary flail of the type in which a rotary head (12) with an annular line storage cavity (46) is rotatable about an axis (36) extending through the centre of the cavity, comprising the steps of winding a coil (85,93,102) of flail line within the storage cavity, extending flail line from the coil radially inwardly thereof, winding the flail line about a post (34) disposed on the rotational axis of the head and in a direction opposite to the direction of rotation of the head about the axis, and extending the flail line from the head through an annular outlet opening (76) about the post and radially from the opening to form a flail (86) having a free end.

15. The method of claim 14, wherein the flail line of the coil of (93) in the storage cavity (46) is wound within the storage cavity in the intended direction of rotation of the head (12) and is connected to the winding about the post via a back loop (92) in the line.

16. The method of claim 14, wherein the flail line of the coil (102) in the storage cavity (46) is wound within the storage cavity in the opposite direction to the intended direction of rotation of the head and the coil is connected to the line winding about the post (34) via a flexible loop (100) in the line

17. The method of claim 14, 15 or 16, including the steps of exerting a centrifugal force on the flail line tending to unwind the flail from the post (34) in the direction of rotation of the head (12) and thereby lengthen the flail, exerting a drag on the flail line tending to wind the flail onto the post in a direction opposite to the direction of rotation of the head and thereby shorten the flail, and maintaining the length of the flail by establishing an equilibrium between the centrifugal force and the drag force.

## Patentansprüche

1. Zufuhrvorrichtung für Schlegelmäher, mit einem Drehkopf (12), der einander gegenüberliegende, quer zu seiner Drehachse (36) sich erstreckende Seiten (14, 16) aufweist, ferner mit einem ringförmigen Speicherhohlraum (46), der die Drehachse (36) des Kopfes umgibt, einem Pfosten (34), der um die Drehachse (36) herum angeordnet ist, einer ringförmigen Auslassöffnung (76), die zu einer Seite (16) des Kopfes hin verläuft und die Achse (36) **einwärts** des Speicherhohlraums umgibt, und einem in dem Speicherhohlraum angeordneten Ring (85, 93, 102) aus Schlegelseil, **dadurch gekennzeichnet, dass** das Seil von dem Speicherhohlraum aus radial einwärts verläuft, um den Pfosten (34) in einer Richtung herum gewickelt ist, die der Soll-Drehrichtung des Kopfes entgegengesetzt ist, und durch die Auslassöffnung hindurch verläuft, um einen Schlegel oder ein Schlegelpaar zu bilden.

2. Vorrichtung nach Anspruch 1, bei der der Kopf (12) einen 360-Grad-Seil-zufuhrkanal (78) aufweist, der von dem Speicherhohlraum (46) radial einwärts und längs dem Pfosten (34) zur Auslassöffnung (76) verläuft.

3. Vorrichtung nach Anspruch 2, bei der der Seil-Zufuhrkanal (78) einen ersten Abschnitt, der nahe der Auslassöffnung (76) angeordnet ist und längs der Achse (36) verläuft, ein von der Achse weggerichtetes Winkelstück und einen zweiten Abschnitt aufweist, der zum Speicherhohlraum (46) verläuft.

4. Vorrichtung nach Anspruch 3, bei der der Seil-Zufuhrkanal (78) ein 90Grad-Krümmungselement aufweist und in die Mitte einer Innenwand des Speicherhohlraums (46) hineinöffnet.

5. Vorrichtung nach Anspruch 2, 3 oder 4, bei der die Weite des Seil-Zufuhrkanals (78) geringer ist als die zweifache Dicke des Schlegelseils.

6. vorrichtung nach einem der vorhergehenden Ansprüche, bei der das oder jedes SChlegelseil des Rings (93) in dem Speicherhohlraum (46) innerhalb des Speicherhohlraums in die Soll-Drehrichtung des Kopfes (12) gewickelt ist und mit dem um den Pfosten (34) gewickelten Abschnitt des Seils via einer Rückwärtsschleife (92) in dem Seil verbunden ist.

7. vorrichtung nach einem der vorhergehenden Ansprüche 1 bis 5, bei der das oder jedes Schlegelseil des Rings (102) in dem Speicherhohlraum (46) innerhalb des Speicherhohlraums in der Richtung gewickelt ist, die der Soll-Drehrichtung des Kopfes (12) entgegengesetzt ist, und mit dem um den Pfosten (34) gewickelten Abschnitt des Seils via einer flexiblen Schleife (100) in dem Seil verbunden ist.

8. Vorrichtung nach einem der vorhergehenden Ansprüche, bei dem der Durchmesser des Rings (88), der durch das (die) um den Pfosten (34) herumgewickelte(n) Schlegelseil (e) gebildet ist, sich eine strecke radial nach außen von dem Pfosten erstreckt.

9. Vorrichtung nach einem der vorhergehenden Ansprüche, mit einem Seil-Leitelement (60), das drehbar auf der einen Seite (16) des Kopfes (12) befestigt ist und den Pfosten (34) umgibt und eine Seilführung (64) zum Führen des Seils radial auswärts aus der Auslassöffnung aufweist.

10. Vorrichtung nach Anspruch 9, bei der das Seil-Leitelement (60) eine zweite Seilführung (64) aufweist und die zwei Seilführungen 180 Grad einander gegenüber angeordnet sind.

11. Vorrichtung nach Anspruch 10, bei der jede Seilführung eine Nut (64) aufweist, wobei die Nuten parallel zueinander und tangential in entgegengesetzte Richtungen weg von der Auslassöffnung (76) verlaufen.

12. Vorrichtung nach einem der vorhergehenden Ansprüche, mit einem Führungselement (68) an dem Ende (38) des Pfostens (34).

13. Vorrichtung nach einem der vorhergehenden Ansprüche, mit einer Schlegelseil-Kartusche (104), die den Speicherhohlraum bildet und von dem Pfosten (34) lösbar ist.

14. Verfahren zum Betreiben eines Schlegelmähers des Typs, bei dem ein Drehkopf (12) mit einem ringförmigen seil-Speicherhohlraum (46) um eine Achse (36) herumdrehbar ist, die durch das Zentrum des Hohlraums verläuft, mit den Schritten des Wickelns eines Rings (85, 93, 102) aus Schlegelseil innerhalb des Speicherhohlraums, des Laufenlassens des Schlegelseils von dem Ring aus radial einwärts zu diesem, des wickelns des Schlegelseils um einen Pfosten (34) herum, der auf der Drehachse des Kopfes angeordnet ist, in einer Richtung entgegengesetzt zu der Drehrichtung des Kopfes um die Achse, und des Laufenlassens des Schlegelseils aus dem Kopf heraus durch eine ringförmige Auslassöffnung (76) um den Pfosten herum und radial aus der Öffnung heraus, um einen Schlegel (86) mit einem freien Ende zu bilden.

15. Verfahren nach Anspruch 14, bei dem das schlegelseil des Rings (93) in dem Speicherhohlraum (46) innerhalb des Speicherhohlraums in der Soll-Drehrichtung des Kopfes (12) gewickelt wird und mit der Wicklung um den Pfosten herum via einer Rückwärtsschleife (92) in dem Seil verbunden wird.

16. Verfahren nach Anspruch 14, bei dem das Schlegelseil des Rings (102) in dem Speicherhohlraum (46) innerhalb des Speicherhohlraums in die zur Soll-Drehrichtung des Kopfes entgegengesetzte Richtung gewickelt wird, und der Ring mit der Seilwicklung um den Pfosten (34) herum via einer flexiblen Schleife (100) in dem Seil verbunden wird.

17. Verfahren nach Anspruch 14, 15 oder 16, mit den Schritten des Ausübens einer Zentrifugalkraft auf das Schlegelseil, um den Schlegel von dem Pfosten (34) in der Drehrichtung des Kopfes (12) abzuwickeIn und dadurch den Schlegel zu verlängern, des Ausübens eines Widerstands auf das Schlegelseil, um den Schlegel auf den Pfosten in einer Richtung aufzuwickeln, die der Drehrichtung des Kopfes entgegengesetzt ist, und um dadurch den Schlegel zu verkürzen, und Beibehalten der Länge des Schlegels durch Herstellen eines Gleichgewichtes zwischen der Zentrifugalkraft und der Widerstandskraft.

## Revendications

1. Dispositif d'alimentation en fil de coupe formant un fléau rotatif comprenant une tête rotative (12) ayant des côtés opposés (14, 16) s'étendant transversalement à son axe de rotation (36), une cavité annulaire (46) formant magasin entourant l'axe de rotation (36) de la tête, un montant (34) disposé sur l'axe de rotation (36), une ouverture de sortie annulaire (76) vers un côté de la tête (16) et entourant l'axe (36) vers l'intérieur de la cavité formant magasin et une bobine (85, 93, 102) de fil de coupe disposé dans la cavité formant magasin **caractérisé en ce que** le fil de coupe qui s'étend depuis la cavité formée en magasin radialement vers l'intérieur est enroulé autour du montant (34) dans une direction opposée au sens de rotation de la tête prévue et s'étend à travers l'ouverture de sortie pour former un fil de coupe en fléau ou une paire de fils de coupe en fléau.

2. Dispositif selon la revendication 1, dans lequel la tête (12) inclut un passage d'alimentation en fil de coupe (78) à 360° s'étendant radialement vers l'intérieur depuis la cavité (46) formant magasin et le long du montant (34) vers l'ouverture de sortie (76).

3. Dispositif selon la revendication 2, dans lequel le passage d'alimentation en fil de coupe (78) inclut une première portion située adjacente à l'ouverture de sortie (76) et s'étendant le long de l'axe (36), un coude partant de l'axe et une seconde portion s'étendant vers la cavité (46) formant magasin.

4. Dispositif selon la revendication 3, dans lequel le passage d'alimentation en fil en coupe (78) inclut un coude à 90° et s'ouvre au centre d'une paroi interne de la cavité (46) formant magasin.

5. Dispositif selon l'une quelconque des revendications 2, 3 ou 4, dans lequel la largeur du passage d'alimentation en fil de coupe (78) est inférieure au double de l'épaisseur du fil de coupe en fléau.

6. Dispositif selon l'une quelconque des revendications précédentes, dans lequel le fil de coupe en fléau ou chaque fil de coupe en fléau de la bobine (93) dans la cavité (46) formant magasin est enroulé à l'intérieur de la cavité formant magasin dans le sens de rotation prévu de la tête (12) et est connecté à la partie de fil de coupe enroulée autour du montant (34) via une boucle en retour (92) dans le fil de coupe.

7. Dispositif selon l'une quelconque des revendications précédentes, dans lequel le fil de coupe en fléau ou chaque fil de coupe en fléau de la bobine (102) dans la cavité (46) formée en magasin est enroulé à l'intérieur de la cavité formant magasin dans la direction opposée au sens de rotation prévu de la tête (12) et est connecté à la partie de fil de coupe enroulée autour du montant (34) via une boucle flexible (100) dans le fil de coupe.

8. Dispositif selon l'une quelconque des revendications précédentes, dans lequel le diamètre de la bobine (88) formé par le ou les fils de coupe en fléau enroulés autour du montant (34) s'étend ou s'étendent sur une certaine distance radialement vers l'extérieur depuis le montant.

9. Dispositif selon l'une quelconque des revendications précédentes, incluant un organe d'orientation de fil de coupe (60) monté avec faculté de rotation sur ledit côté (16) de la tête (12), ledit organe entourant le montant (34) et ayant un guide-fil (64) pour guider les fils de coupe radialement vers l'extérieur depuis l'ouverture de sortie.

10. Dispositif selon la revendication 9, dans lequel l'organe d'orientation de fil (60) inclut un deuxième guide fil (64), les deux guides-fils étant situés à 180° en travers l'un de l'autre.

11. Dispositif selon la revendication 10, dans lequel chaque guide-fil comprend une rainure (64), les rainures s'étendant mutuellement parallèles et s'écartant tangentiellement dans la direction opposée de l'ouverture de sortie (76).

12. Dispositif selon l'une quelconque des revendications précédentes, incluant un organe de guidage (68) sur l'extrémité (38) du montant (34).

13. Dispositif selon l'une quelconque des revendications précédentes, comprenant une cartouche de fil de coupe en fléau (104) définissant la cavité formant magasin et pouvant être sortie du montant (34).

14. Procédé d'utilisation d'une tondeuse à fil tournant du type ayant une tête rotative (12) avec une cavité annulaire (46) formant magasin pour le fil de coupe pouvant tourner autour d'un axe (36) s'étendant et passant par le centre de la cavité, comprenant les étapes consistant à : enrouler une bobine (85, 93, 102) de fil de coupe tournant à l'intérieur de la cavité formant magasin, développer le fil de coupe depuis la bobine radialement vers l'intérieur, enrouler le fil de coupe autour d'un montant (34) disposé sur l'axe de rotation de la tête et dans une direction opposée au sens de rotation de la tête autour de l'axe, et sortir le fil de coupe de la tête en passant par une ouverture de sortie annulaire (76) autour du montant et radialement depuis l'ouverture pour former un fil en fléau (86) ayant une extrémité libre.

15. Procédé selon la revendication 14, dans lequel le fil de coupe de la bobine (93) dans la cavité (46) formant magasin est enroulé à l'intérieur de la cavité formant magasin dans le sens de rotation prévu de la tête (12) et est connecté à l'enroulement autour du montant via une boucle en retour (92) dans le fil.

16. Procédé selon la revendication 14, dans lequel le fil de coupe de la bobine (102) dans la cavité (46) formant magasin est enroulé dans la cavité formant magasin dans la direction opposée au sens de rotation prévu de la tête et la bobine est connectée à l'enroulement de fil autour du montant (34) via une boucle flexible (100) dans le fil.

17. Procédé selon la revendication 14, 15 ou 16, incluant les étapes consistant à exercer une force centrifuge sur le fil en fléau qui tend à dérouler le fil du montant (34) dans le sens de rotation de la tête (12) et, en conséquence, augmente la longueur du fil en fléau, exercer une force de résistance sur le fil en fléau qui tend à enrouler le fil en fléau sur le montant dans une direction opposée au sens de rotation de la tête et, en conséquence, diminue la longueur du fil en fléau et à maintenir la longueur de fil en fléau en établissant un équilibre entre la force centrifuge et la force de résistance.
